**Europäisches Patentamt**

**European Patent Office**

**Office européen des brevets**

(11) Veröffentlichungsnummer: **0 416 382 A1**

# EUROPÄISCHE PATENTANMELDUNG

(21) Anmeldenummer: 90116199.2

(22) Anmeldetag: 24.08.90

(51) Int. Cl.5: **G01S 15/60**

(30) Priorität: 05.09.89 DE 3929455

(43) Veröffentlichungstag der Anmeldung:
13.03.91 Patentblatt 91/11

(84) Benannte Vertragsstaaten:
AT CH FR LI

(71) Anmelder: **Severin, Jürgen**
**Kastanienweg 24**
**W-6082 Mörfelden-Walldorf(DE)**

(72) Erfinder: **Severin, Jürgen**
**Kastanienweg 24**
**W-6082 Mörfelden-Walldorf(DE)**

(54) **Vorrichtung zur Messung von Geschwindigkeit und Wegstrecke bei Skiern.**

(57) Die angemeldete Vorrichtung dient der Messung von Geschwindigkeit und zurückgelegter Strecke beim Skilaufen. Am Ski befinden sich, nach unten gerichtet, ein Sender und ein Empfänger von Ultraschallwellen. Je nach Gleitgeschwindigkeit weicht die empfangene Frequenz von der gesendeten ab (Doppler-Effekt). Das Ausmaß der gemessenen Frequenzabweichung läßt einen Rückschluß auf die Geschwindigkeit zu. In Verbindung mit einer Zeitmessung läßt sich auch der Weg errechnen. Angesichts der nur begrenzten Anforderungen an die Exaktheit der Meßergebnisse kann die anlage klein genug für einen Einbau in den Ski sein. Als "Rechner" dient ein Chip, die Anzeige erfolgt auf Knopfdruck auf einem Display. Energiequelle ist eine Batterie.

EP 0 416 382 A1

Die Vorrichtung zum Messen von Strecken und Geschwindigkeiten bei einem auf Schnee gleitenden Körper (Gerät) besteht aus einem Sender von Ultraschall-Wellen, einem Empfänger, einer Rechnereinheit (Chip), einem Display zur ERgebnisanzeige und einer Batterie. Sender und Empfänger bilden eine Einheit, die in die Lauf- bzw. Gleitfläche integriert wird; kratzfester, durchsichtiger Kunststoff bildet den äußeren Abschluß. Angesichts der reduzierten Ansprüche an die Präzision der Meßergebnisse kann die Einheit klein genug sein, so daß sie keine Probleme für die Stabilität und Elastizität des Skis schafft.

Mit Hilfe der Anwendung des Doppler-Verfahrens kann die Geschwindigkeit des Skis in Relation zum Schnee oder Wasser erfaßt werden. Die Versorgung mit Strom sowie die Auswertung und Aufbereitung der empfangenen Daten und die Sichtbarmachung der Ergebnisse erfolgt beim Ski in einem kleinen wasserdichten Plastikgehäuse, das - ähnlich den Einrichtungen, die das Übereinandergleiten dar Skier verhindern sollen - auf der Schaufel des Skis befestigt wird; die Verbindung zur Sender/Empfänger-Einheit erfolgt über eingelassene dunne Leitungen.

In konstanten, kurzen Zeitabständen (jeweils einmal pro Sekunde) wird ein Ultraschall-Impuls ausgesandt.

Das - je nach Schnelligkeit der Bewegung mehr oder minder stark verzerrte - Echo wird vom Empfänger aufgenommen. Der in der Rechnereinheit erkannte Grad der Verzerrung ist nun ein Ausdruck für die gemessene Geschwindigkeit.

Da die Messung in konstanten Abständen erfolgt, kann man den erkannten Grad der Verzerrung auch direkt als Bestimmung der in der Zeiteinheit zurückgelegten Strecke nehmen (m/sec x 1sec = m).

Die einzelnen Meßergebnisse (je Sekunde eines) werden addiert. Festgehalten wird auch die Zeit (die Zahl der Messungen), in der das Meßergebnis einen bestimmten, festzulegenden Wert überachreitet, also eine Mindestgeschwindigkeit erreicht war. Stillstand und langsame Bewegungen können so bei der Erfassung ausgeschlossen werden.

Mit Ein/Aus-Schaltung wird zu Beginn aktiviert. Das Display zeigt auf Knopfdruck (zuvor muß stabile, schützende Kappe geöffnet werden) die gefahrene Strecke und die durchschnittliche Geschwindigkeit während der Fahrzeit. Zwischenmessungen bei fortlaufender Gesamtstrecken - und - zeitmessung sind möglich.

tung von Skiern mit Vorrichtungen zur Messung gefahrener Strecken und Geschwindigkeiten unter Nutzung der Ultraschall-Doppler-Technik.

## Ansprüche

Patentrechtlich geschützt werden soll die Ausstat-

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | BE-A-8 880 27  (J. RAMEIL)<br>* Seite 1, Zeilen 1-11; Seite 3, Zeilen 15-18,22-28; Patentansprüche 1,7; Zusammenfassung *<br>– – – | 1 | G 01 S 15/60 |
| X | WO-A-8 802 494  (INSIGHT)<br>* Zusammenfassung; Figuren 1-4; Seite 4, Zeile 8 - Seite 6, Zeile 9 *<br>– – – | 1 | |
| P,X | WO-A-9 001 707  (P.G. ADAMS)<br>* Ganzes Dokument *<br>– – – – – | 1 | |

**RECHERCHIERTE SACHGEBIETE (Int. Cl.5)**

G 01 S

Der vorliegende Recherchenbericht wurde für alle Patentansprüche erstellt

| Recherchenort | Abschlußdatum der Recherche | Prüfer |
|---|---|---|
| Den Haag | 13 November 90 | VAN WEEL E.J.G. |